# EUROPÄISCHE PATENTSCHRIFT

(11) **EP 3 469 969 B1**
(45) Veröffentlichungstag und Bekanntmachung des Hinweises auf die Patenterteilung: **15.07.2020**
(21) Anmeldenummer: 18198620.9
(22) Anmeldetag: 04.10.2018
(51) Int. Cl.: A47J 43/046, A47J 43/07

(54) **ELEKTROMOTORISCH BETRIEBENE KÜCHENMASCHINE SOWIE RÜHRGEFÄSS UND RÜHRWERK DAFÜR**
ELECTRIC MOTOR-OPERATED FOOD PROCESSOR, MIXING VESSEL AND AGITATOR THEREFOR
ROBOT DE CUISINE ENTRAÎNÉ PAR MOTEUR ÉLECTRIQUE AINSI QUE BAC À AGITATION ET AGITATEUR ASSOCIÉS

(30) Priorität: 11.10.2017 DE 102017123690
(43) Veröffentlichungstag der Anmeldung: 17.04.2019
(73) Patentinhaber: Vorwerk & Co. Interholding GmbH, 42275 Wuppertal (DE)
(72) Erfinder: Esslinger, Michael, 78628 Rottweil (DE); Zuber, Daniel, 42111 Wuppertal (DE); Scholder, Patrick, 42275 Wuppertal (DE)
(74) Vertreter: Müller, Enno

(56) Entgegenhaltungen:
- CN-U- 205 568 795
- DE-A1-102009 006 041
- DE-A1-102013 112 913
- DE-U1- 8 016 184

## Beschreibung

### Gebiet der Technik

Die Erfindung betrifft zunächst ein Rührgefäß für eine elektromotorisch betriebene Küchenmaschine, mit einem Gefäßboden, welcher eine Bodenöffnung zur Aufnahme eines durch den Gefäßboden in das Rührgefäß ragbaren Rührwerks aufweist, wobei eine Öffnungskontur der Bodenöffnung in Umfangsrichtung eine Mehrzahl von hintereinander ausgebildeten Positionierungsaussparungen aufweist.

Des Weiteren betrifft die Erfindung ein Rührwerk zum Einsetzen in eine Bodenöffnung eines Gefäßbodens eines Rührgefäßes einer elektromotorisch betriebenen Küchenmaschine, wobei das Rührwerk mehrere an seiner Umfangsfläche in Umfangsrichtung hintereinander ausgebildete Positionierungsvorsprünge aufweist.

Des Weiteren betrifft die Erfindung ein Rührgefäß mit einem Rührwerk sowie eine elektromotorisch betriebene Küchenmaschine mit einem Basisgerät, einem mit dem Basisgerät verbindbaren Rührgefäß und einem in eine Bodenöffnung eines Gefäßbodens des Rührgefäßes einsetzbaren Rührwerk.

### Stand der Technik

Elektromotorisch betriebene Küchenmaschinen sowie Rührgefäße und Rührwerke dafür sind im Stand der Technik bekannt, beispielsweise aus der DE 10 2010 016 667 A1 oder der EP 2 875 762 B1.

Die Küchenmaschinen sowie auch die Rührgefäße und Rührwerke für diese finden insbesondere im Haushaltsbereich Anwendung. Zum Verrühren oder auch Verkleinern von in das Rührgefäß eingebrachten Medien, insbesondere Lebensmitteln, ist einem Gefäßboden des Rührgefäßes ein Rührwerk zugeordnet, beispielsweise in Form eines Messersatzes mit einer Mehrzahl von Messern. Eine Rührwerkwelle des Rührwerks durchsetzt den Gefäßboden, insbesondere zur Ausbildung eines frei nach unten über den Gefäßboden hinausragenden Kupplungsmitnehmers. Weiter ist bekannt, das Rührgefäß mit einer Rührgefäßaufnahme eines Basisgerätes der Küchenmaschine zu verbinden, auf welcher das Rührgefäß beispielsweise mit Hilfe eines topfartigen Fußteils steht. Dieses Fußteil kann zur Fixierung des Rührwerkes an dem Rührgefäß dienen. Das Rührwerk kann zu Reinigungszwecken und/oder zum Zwecke eines Austausches lösbar an dem Rührgefäß angeordnet werden. Weiter ist bekannt, an einer Umfangsfläche des Rührwerks Positionierungsvorsprünge zur Drehfestlegung an dem Gefäßboden vorzusehen, welche mit einer entsprechenden Öffnungskontur einer Bodenöffnung des Gefäßbodens zusammenwirken.

Bei den im Stand der Technik bekannten Rührgefäßen und Rührwerken stimmt die Anzahl der Positionierungsaussparungen des Gefäßbodens mit der Anzahl der Positionierungsvorsprünge des Rührwerks überein, wobei je nach der aktuellen Modellreihe der Küchenmaschine aus Sicherheitsgründen eine andere Anzahl von Positionierungsaussparungen bzw. Positionierungsvorsprüngen vorgesehen ist, um die Verwechslung von Komponenten auszuschließen. Für ein aktuelles Modell einer Küchenmaschine kann beispielsweise vorgesehen sein, dass die Bodenöffnung des Rührgefäßes sechs Positionierungsaussparungen aufweist, in welche der Modellreihe entsprechend ein Rührwerk mit sechs Positionierungsvorsprüngen eingesetzt werden kann.

### Zusammenfassung der Erfindung

Ausgehend von dem vorgenannten Stand der Technik ist es nun Aufgabe der Erfindung, ein Rührgefäß bzw. ein Rührwerk so auszubilden, dass es insbesondere aus Sicherheitsgründen unmöglich ist, ein Rührwerk einer älteren Modellgeneration in ein Rührgefäß einer neueren Modellgeneration einzusetzen, gleichzeitig jedoch ein Rührwerk einer neueren Modellgeneration in ein Rührgefäß einer alten Modellgeneration eingesetzt werden kann.

Zur Lösung der vorgenannten Aufgabe wird zunächst ein Rührgefäß für eine elektromotorisch betriebene Küchenmaschine vorgeschlagen, bei welchem mehrere erste Positionierungsaussparungen der Öffnungskontur mit einer ersten radialen Längendifferenz über einen kleinsten Radius der Öffnungskontur hervorstehen, und wobei die Öffnungskontur mindestens eine in Umfangsrichtung zwischen zwei ersten Positionierungsaussparungen ausgebildete zweite Positionierungsaussparung aufweist, welche mit einer zweiten radialen Längendifferenz über den kleinsten Radius der Öffnungskontur hervorsteht, welche zweite radiale Längendifferenz kleiner ist als die erste radiale Längendifferenz.

Korrespondierend zu dem derart ausgebildeten Rührgefäß wird mit der Erfindung des Weiteren auch ein Rührwerk vorgeschlagen, welches mehrere an seiner Umfangsfläche in Umfangsrichtung hintereinander ausgebildete Positionierungsvorsprünge aufweist, wobei mehrere erste Positionierungsvorsprünge der Umfangsfläche mit einer ersten radialen Längendifferenz über einen kleinsten Radius der Umfangsfläche hervorstehen, und wobei die Umfangsfläche mindestens einen in Umfangsrichtung zwischen zwei ersten Positionierungsvorsprüngen ausgebildeten zweiten Positionierungsvorsprung aufweist, welcher mit einer zweiten radialen Längendifferenz über den kleinsten Radius der Umfangsfläche hervorsteht, welche zweite radiale Längendifferenz kleiner ist als die erste radiale Längendifferenz.

Durch das erfindungsgemäße Rührgefäß bzw. das erfindungsgemäße Rührwerk und insbesondere durch eine Kombination dieser beiden kann nun erreicht werden, dass ein Rührwerk einer älteren Modellgeneration, welches mehr zweite Positionierungsvorsprünge aufweist als die zweiten Positionierungsaussparung an dem Rührgefäß erlauben, nicht in das Rührgefäß der aktuellen Modellgeneration eingesetzt werden kann. Dadurch wird verhindert, dass beispielsweise ein Rührwerk, welches nicht für den Drehzahlbereich einer aktuellen Modellgeneration der Küchenmaschine geeignet ist, mit dem aktuellen Rührgefäß verwendet werden kann. Sofern ein Rührwerk der älteren Modellgeneration beispielsweise sechs Positionierungsvorsprünge aufweist, die eine erste radiale Längendifferenz aufweisen, und das Rührgefäß der aktuellen Modellgeneration zwar ebenfalls sechs Positionierungsaussparungen aufweist, von dieser aber zumindest eine eine zweite radiale Längendifferenz aufweist, die geringer ist als die erste radiale Längendifferenz, gelingt es nicht, das Rührwerk in das Rührgefäß einzusetzen. Vielmehr wird der Nutzer unmittelbar dadurch auf die nicht gegebene Kompatibilität der beiden Modellgenerationen aufmerksam, dass sich das Rührwerk nicht in die Bodenöffnung des Gefäßbodens des Rührgefäßes einsetzen lässt. Umgekehrt kann ein Rührwerk einer aktuellen Modellgeneration mit beispielsweise drei langen ersten Positionierungsvorsprüngen und zumindest einem kurzen zweiten Positionierungsvorsprung ohne Weiteres in ein Rührgefäß einer älteren Modellgeneration mit sechs langen ersten Positionierungsaussparungen eingesetzt werden, sofern die Positionen in Umfangsrichtung identisch sind und die Breiten der Aussparungen und Vorsprünge korrespondieren. Die Formen und Größen der Positionierungsaussparungen bzw. Positionierungsvorsprünge bleiben bei sowohl der älteren als auch der neuen Modellgeneration im Wesentlichen gleich, so dass sich ein nahezu identischer Sitz des Rührwerks innerhalb des Rührgefäßes ergibt. Dadurch, dass die Anzahl der ersten Positionierungsaussparungen bzw. ersten Positionierungsvorsprünge reduziert wird, insbesondere halbiert wird, bleibt zudem das Rotationsspiel des Rührwerkes innerhalb der Bodenöffnung des Rührgefäßes gleich. Lediglich die möglichen Einbaupositionen des Rührwerks bezogen auf die Umfangsrichtung des Rührgefäßes verringern sich, beispielsweise von sechs auf drei, also beispielsweise von einer Formkorrespondenz nach jeweils 60° auf eine Formkorrespondenz nach jeweils 120°.

Gemäß einer alternativen Ausführungsform wird ein Rührwerk zum Einsetzen in eine Bodenöffnung eines Gefäßbodens eines Rührgefäßes einer elektromotorisch betriebenen Küchenmaschine vorgeschlagen, wobei das Rührwerk mehrere an seiner Umfangsfläche in Umfangsrichtung hintereinander ausgebildete Positionierungsvorsprünge aufweist, und wobei das Rührwerk genau drei in Umfangsrichtung in äquidistanten Abständen ausgebildete Positionierungsvorsprünge aufweist. Analog dazu wird des Weiteren auch ein Rührgefäß für eine elektromotorisch betriebene Küchenmaschine vorgeschlagen, wobei das Rührgefäß einen Gefäßboden aufweist, welcher eine Bodenöffnung zur Aufnahme eines durch den Gefäßboden in das Rührgefäß ragbaren Rührwerks aufweist, wobei die Bodenöffnung mehrere an ihrer Öffnungskontur in Umfangsrichtung hintereinander ausgebildete Positionierungsaussparungen aufweist, nämlich genau drei in Umfangsrichtung in äquidistanten Abständen ausgebildete Positionierungsaussparungen. Gemäß dieser Ausführungsformen weist das Rührgefäß bzw. das Rührwerk nur drei Positionierungsaussparungen bzw. Positionierungsvorsprünge auf. Es ist nicht vorgesehen, zusätzlich noch kürzere zweite Positionierungsaussparungen bzw. Positionierungsvorsprünge an dem Rührgefäß bzw. Rührwerk auszubilden. Diese Ausgestaltung ist für alle Situationen geeignet, bei welchen Rührgefäße früherer Gerätegenerationen eine höhere Anzahl von Positionierungsaussparungen aufweisen, von welchen zumindest drei zu den Umfangspositionen der Positionierungsvorsprünge des aktuellen Rührwerks korrespondieren. Dies ist beispielsweise der Fall, wenn ein Rührgefäß einer früheren Generation alle 60° eine Positionierungsaussparung aufweist, das Rührwerk einer aktuellen Generation jedoch nur alle 120° Positionierungsvorsprünge aufweist. Umgekehrt wäre eine Kompatibilität eines älteren Rührwerks in ein neues Rührgefäß nicht möglich.

Des Weiteren wird in Bezug auf ein Rührgefäß bzw. Rührwerk vorzugsweise vorgeschlagen, dass der Gefäßboden genau drei erste Positionierungsaussparungen aufweist und/oder dass das Rührwerk genau drei erste Positionierungsvorsprünge aufweist. Diese Ausführungsform gilt sowohl in Bezug auf Rührgefäße bzw. Rührwerke, welche nur Positionierungsaussparungen bzw. -vorsprünge einer einzigen radialen Längendifferenz aufweisen, als auch in Bezug auf Rührgefäße bzw. Rührwerke, welche sowohl erste Positionierungsaussparungen bzw. erste Positionierungsvorsprünge, als auch zweite Positionierungsaussparungen bzw. zweite Positionierungsvorsprünge aufweisen.

Des Weiteren wird vorgeschlagen, dass der Gefäßboden des Rührgefäßes genau drei zweite Positionierungsaussparungen aufweist bzw. analog, dass das Rührwerk genau drei zweite Positionierungsvorsprünge aufweist. Gemäß dieser Ausführungsform sind neben den ersten Positionierungsaussparungen bzw. Positionierungsvorsprüngen mit einer ersten radialen Längendifferenz auch drei zweite Positionierungsaussparungen bzw. zweite Positionierungsvorsprünge vorhanden, die eine kürzere Längendifferenz aufweisen als die erste radiale Längendifferenz der ersten Positionierungsaussparungen bzw. Positionierungsvorsprünge. Somit existieren an der Öffnungskontur des Gefäßbodens bzw. der Umfangsfläche des Rührwerks einerseits längere Positionierungsaussparungen bzw. Positionierungsvorsprünge, welche formkorrespondierend sowohl zu Rührgefäßen bzw. Rührwerken älterer und neuerer Gerätegenerationen passen, und andererseits zweite Positionierungsaussparungen bzw. Positionierungsvorsprünge, welche nur bei korrespondierender Kombination eines Rührgefäßes und eines Rührwerkes derselben Gerätegeneration vollständig in Bezug auf die Aussparungen und Vorsprünge miteinander korrespondieren, so dass keine freien Positionierungsaussparungsbereiche existieren, die nicht von einem Positionierungsvorsprung vollständig abgedeckt sind.

Des Weiteren wird vorgeschlagen, dass die erste radiale Längendifferenz und die zweite radiale Längendifferenz einen Längenunterschied von mindestens 1 mm, bevorzugt von mindestens 2 mm, zueinander aufweisen. Gemäß dieser Ausführung weisen die Positionierungsaussparungen des Rührgefäßes bzw. die Positionierungsvorsprünge des Rührwerks unterschiedliche Längen auf, die sich um mindestens 1 mm, bevorzugt jedoch um mindestens 2 mm, unterscheiden. Beispielsweise kann vorgesehen sein, dass die Öffnungskontur bzw. die Umfangsfläche in äquidistanten Abständen abwechselnd eine lange und eine kurze Positionierungsaussparung bzw. einen langen und einen kurzen Positionierungsvorsprung aufweisen. Sofern die Anzahl der langen und kurzen Positionierungsaussparungen bzw. Positionierungsvorsprünge gleich ist, ergibt sich bei äquidistanten Abständen eine mögliche Einbauposition des Rührwerks an der Bodenöffnung nach jeweils einem Lang-Kurz-Aussparungspaar bzw. einem Lang-Kurz-Vorsprungpaar. Der Längenunterschied von mindestens 1 mm, bevorzugt mindestens 2 mm, reicht dabei aus, um zuverlässig auszuschließen, dass ein längerer Positionierungsvorsprung in eine kürzere Positionierungsaussparung gedrückt werden kann. Selbst wenn ein Nutzer einen längeren Positionierungsvorsprung mit Kraft und ggf. Verkanten gegen eine kürzere Positionierungsaussparung drückt, ist der Längenunterschied so groß, dass eine Formpassung nicht erreicht werden kann. Dies merkt der Nutzer unmittelbar bei der Handhabung.

Des Weiteren wird vorgeschlagen, dass die erste radiale Längendifferenz größer ist als 2 mm, vorzugsweise größer ist als 3 mm. In anderen Worten bedeutet dies, dass die ersten Positionierungsvorsprünge um mehr als 2 mm, vorzugsweise mehr als 3 mm, über die Grundfläche des Rührwerks mit dem kleinsten Radius hinausragen, bzw. dass die ersten Positionierungsaussparungen bezogen auf eine kreisförmige Grundkontur mit einem kleinsten Radius um mehr als 2 mm, vorzugsweise mehr als 3 mm, hinausragen.

Demgegenüber wird des Weiteren vorgeschlagen, dass die zweite radiale Längendifferenz kleiner ist als 2 mm. Die zweiten Positionierungsvorsprünge bzw. zweiten Positionierungsaussparungen weisen somit eine Länge von weniger als 2 mm auf, bezogen auf die Umfangslinie eines Kreises mit einem kleinsten Radius der Umfangsfläche bzw. Öffnungskontur. Insbesondere kann die zweite radiale Längendifferenz ungefähr 1 mm betragen. Die kurzen Positionierungsvorsprünge bzw. Positionierungsaussparungen weichen somit nur minimal, nämlich weniger als 2 mm, insbesondere 1 mm, von dem kleinsten Radius der Umfangsfläche des Rührwerks bzw. der Öffnungskontur der Bodenöffnung ab, sind jedoch andererseits so lang, dass diese zum Finden einer korrekten Einbauposition des Rührwerks in einem Rührgefäß beitragen.

Des Weiteren wird vorgeschlagen, dass der kleinste Radius der Öffnungskontur der Bodenöffnung des Gefäßbodens des Rührgefäßes und/oder der kleinste Radius der Umfangskontur der Umfangsfläche des Rührwerks zwischen 10 mm und 15 mm beträgt. Der kleinste Radius entspricht einer kreisförmigen Grundfläche der Bodenöffnung des Rührgefäßes bzw. der Umfangsfläche des Rührwerks. Bei einer Öffnungskontur mit einem kleinsten Radius von beispielsweise 10 mm weist ein entfernter Endbereich einer Positionierungsaussparung mit einer ersten radialen Längendifferenz von beispielsweise 3 mm einen Abstand von insgesamt 13 mm zu einem Kreiszentrum auf.

Schließlich wird ein Rührgefäß mit einem Rührwerk vorgeschlagen, welches so ausgebildet ist, dass ein erster Positionierungsvorsprung in Bezug auf seine Form und Größe so zu einer ersten Positionierungsaussparung korrespondiert, dass der erste Positionierungsvorsprung die erste Positionierungsaussparung vollständig füllt, und dass ein zweiter Positionierungsvorsprung in Bezug auf seine Form und Größe so zu einer zweiten Positionierungsaussparung korrespondiert, dass der zweite Positionierungsvorsprung die zweite Positionierungsaussparung vollständig füllt. Diese Ausgestaltung beschreibt den optimalen Fall, dass das Rührwerk und das Rührgefäß in Bezug auf die Positionierungsaussparungen bzw. Positionierungsvorsprünge formkorrespondierend ausgebildet sind. Dies ist der Fall, wenn das hier vorgeschlagene Rührwerk und das Rührgefäß zu derselben Gerätegeneration einer Küchenmaschine gehören. Sofern keine Formkorrespondenz existiert, kann das Rührwerk nicht in das Rührgefäß eingesetzt werden. In dem Fall, dass ein Rührwerk einer aktuellen Gerätegeneration in ein älteres Rührgefäß eingesetzt werden soll, kommt es vorzugsweise zumindest zu einer teilweisen Formkorrespondenz in Bezug auf zumindest die ersten Positionierungsaussparungen, so dass das neue Rührwerk in das ältere Rührgefäß eingesetzt werden kann. Die zweiten Positionierungsaussparungen des älteren Rührgefäßes bleiben dabei ggf. zumindest teilweise ungefüllt, wobei jedoch eine Abdichtung des Rührgefäßes bzw. dessen Bodenöffnung durch ein Dichtelement und/oder einen Lagerkörper des Rührwerks erfolgt. Ein in dem Rührgefäß aufgenommenes Medium, insbesondere Lebensmittel, kann somit nicht durch die Bodenöffnung aus dem Rührgefäß gelangen.

Schließlich wird neben den zuvor beschriebenen Rührgefäßen und Rührwerken des Weiteren auch eine elektromotorisch betriebene Küchenmaschine vorgeschlagen, welche ein Basisgerät, ein mit dem Basisgerät verbindbares Rührgefäß und ein in eine Bodenöffnung eines Gefäßbodens des Rührgefäßes einsetzbares Rührwerk aufweist, wobei das Rührgefäß und/oder das Rührwerk nach einer der zuvor beschriebenen Ausführungsformen ausgebildet ist. Die weiteren Vorteile der elektromotorisch betriebenen Küchenmaschine ergeben sich dabei wie zuvor in Bezug auf das Rührgefäß bzw. das Rührwerk beschrieben.

### Kurze Beschreibung der Zeichnungen

Im Folgenden wird die Erfindung anhand von Ausführungsbeispielen näher erläutert. Es zeigen:
- Fig. 1: eine elektromotorisch betriebene Küchenmaschine mit einem Rührgefäß,
- Fig. 2: einen Längsschnitt durch die Küchenmaschine,
- Fig. 3: eine Explosionsdarstellung mit einem Rührwerk, einem Rührgefäß und einem Fußteil für das Rührgefäß,
- Fig. 4: ein erfindungsgemäßes Rührwerk,
- Fig. 5: einen Teilbereich eines Rührwerks gemäß dem Stand der Technik,
- Fig. 6: einen Teilbereich eines erfindungsgemäßen Rührwerks gemäß einer zweiten Ausführungsform,
- Fig. 7: eine Kontur der in Fig. 5 und Fig. 6 dargestellten Teilbereiche der Rührwerke sowie eine Überlagerung dieser.

### Beschreibung der Ausführungsformen

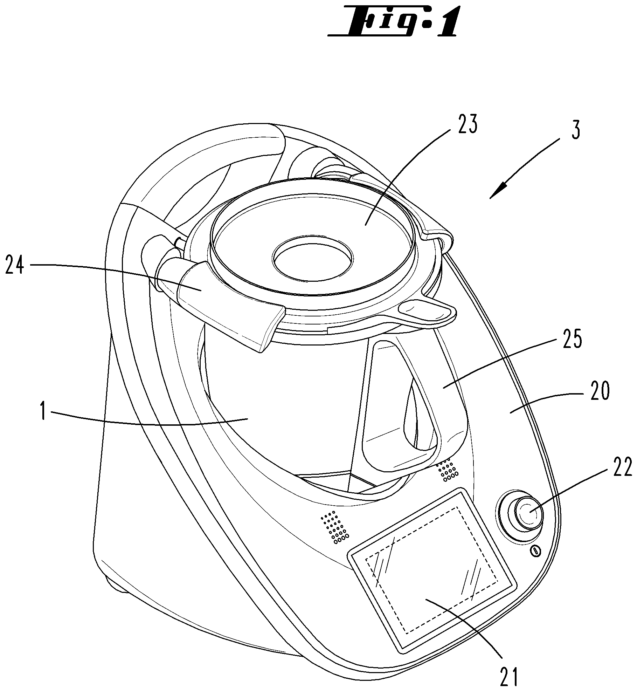

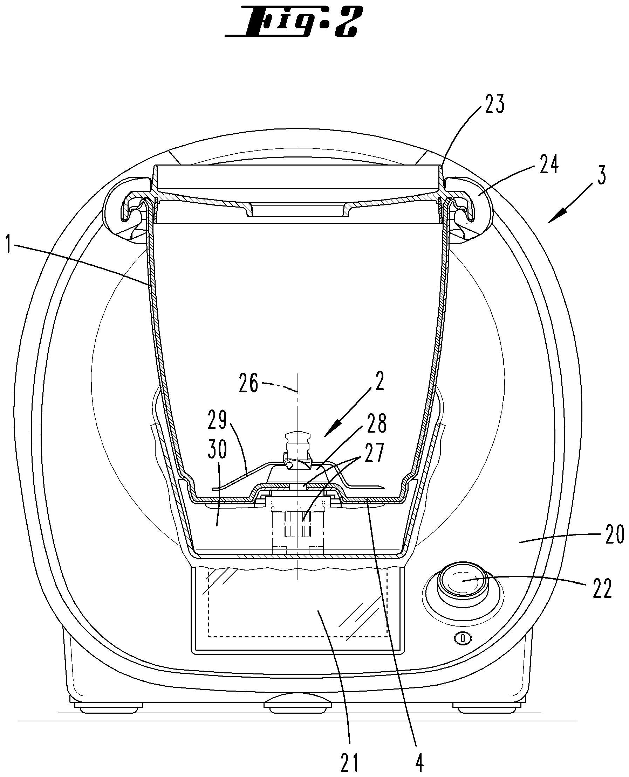

Fig. 1 zeigt eine erfindungsgemäße Küchenmaschine 3 mit einem Rührgefäß 1. Die Küchenmaschine 3 weist ein Basisgerät 20 mit einer Rührgefäßaufnahme (nicht dargestellt) auf, in welche das Rührgefäß 1 hier beispielsweise eingesetzt ist. Einem Gefäßboden 4 des Rührgefäßes 1 ist ein Rührwerk 2 zugeordnet (siehe beispielsweise Fig. 2), welches über einen in dem Basisgerät 20 angeordneten, nicht dargestellten Elektromotor rotierbar ist. Das Rührgefäß 1 besitzt hier beispielsweise einen Griff 25, ist topfartig mit kreisrundem Querschnitt ausgebildet und trägt zentral an dem Gefäßboden 4 angeordnet das Rührwerk 2. Dem Gefäßboden 4 kann des Weiteren eine elektrische Widerstandsheizung zugeordnet sein.

Das beispielhaft vorgeschlagene Basisgerät 20 der Küchenmaschine 3 weist hier des Weiteren ein Display 21 auf, auf welchem ein Auswahlmenü, Zubereitungsanweisungen oder dergleichen angezeigt werden können. Daneben ist ein Schalter 22 angeordnet, welcher hier als Dreh-Tast-Schalter ausgebildet ist. Über diesen kann beispielsweise die Küchenmaschine 3 ein- und ausgeschaltet werden oder eine Auswahl getroffen werden, die beispielsweise auf dem Display 21 angezeigt wird. Das Basisgerät 20 verfügt zudem über zwei Verriegelungselemente 24 in der Form von Verriegelungswalzen, welche zur Verriegelung des Rührgefäßes 1 mit einem Deckel 23 dienen.

Fig. 2 zeigt einen Längsschnitt der in Fig. 1 dargestellten Küchenmaschine 3. Zu erkennen ist das Rührwerk 2, welches durch den Gefäßboden 4 des Rührgefäßes 1 hindurch in das Basisgerät 20 der Küchenmaschine 3 ragt. In dem Basisgerät 20 befindet sich ein Elektromotor mit einer entsprechenden Antriebswelle, mit welcher das Rührwerk 2 koppelbar ist. Dies ist in Fig. 2 nicht im Detail dargestellt. Das Rührwerk 2 ist hier beispielsweise ein Messersatz mit einer Mehrzahl von Messern 29. Das Rührwerk 2 weist des Weiteren einen Lagerkörper 28 auf, welcher drehfest an dem Rührgefäß 1 anordenbar ist. Eine Rührwerkwelle 27 ist hingegen relativ zu dem Lagerkörper 28 und auch dem Rührgefäß 1 rotationsbeweglich, nämlich um eine Rotationsachse 26 rotierbar. Das Rührwerk 2 ist des Weiteren mit einem Fußteil 30 des Rührgefäßes 1 verbunden, welcher das Rührwerk 2 drehfest an dem Rührgefäß 1 fixiert.

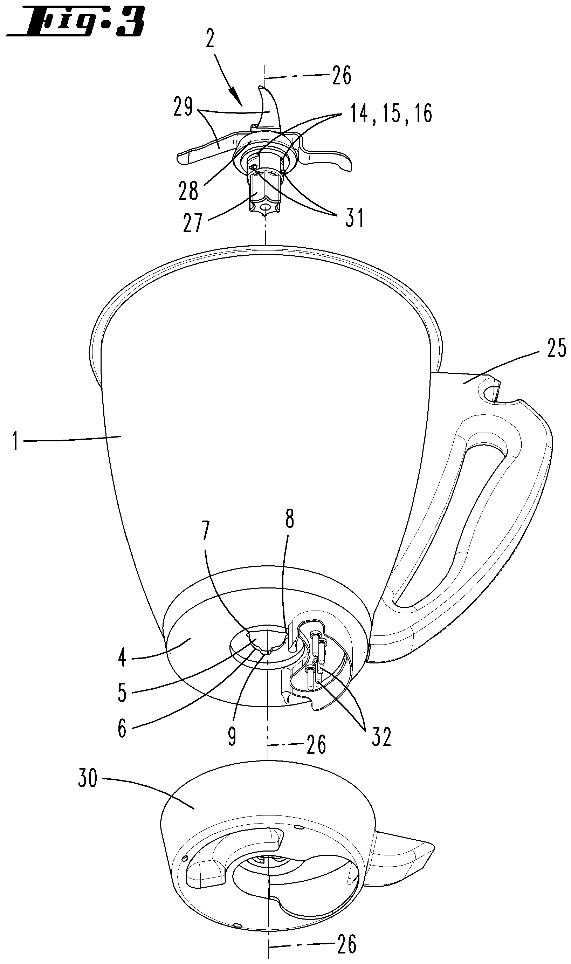

Fig. 3 zeigt ein Rührgefäß 1 mit einem entnommenen Rührwerk 2 gemäß einer ersten Ausführungsform und einem von dem Gefäßboden 4 des Rührgefäßes 1 abgenommenen Fußteil 30. Das Rührwerk 2 ist ein Messerlager mit einer Mehrzahl von Messern 29, welche drehfest mit einer Rührwerkwelle 27 verbunden sind. Die Rührwerkwelle 27 ist drehbar in einem Lagerkörper 28 des Rührwerks 2 aufgenommen, welcher Lagerkörper 28 durch eine Bodenöffnung 5 des Gefäßbodens 4 des Rührgefäßes 1 hindurchgeführt werden kann, um diesen drehfest mit dem Gefäßboden 4 zu verbinden. An dem Lagerkörper 28 sind mehrere Positionierungsvorsprünge 14, 15, 16 angeordnet, welche durch entsprechende Positionierungsaussparungen 7, 8, 9 der Bodenöffnung 5 des Gefäßbodens 4 geführt werden können. Jede Positionierungsaussparung 7, 8, 9 korrespondiert in Bezug auf ihre Form und Größe mit einem Positionierungsvorsprung 14, 15, 16. In der Darstellung werden insgesamt drei Positionierungsvorsprünge 14, 15, 16 bzw. drei Positionierungsaussparungen 7, 8, 9 gezeigt. An dem Rührwerk 2 befinden sich des Weiteren Fixierungsvorsprünge 31, welche als Gegenlager bei der Fixierung des Lagerkörpers 28 des Rührwerks 2 an dem Rührgefäß 1 dienen. Die Fixierungsvorsprünge 31 befinden sich bezogen auf eine Richtung parallel zu der Längserstreckung der Rotationsachse 26 vor je einem Positionierungsvorsprung 14, 15, 16, so dass die Fixierungsvorsprünge 31 bezogen auf eine Montagerichtung des Rührwerks 2 an dem Rührgefäß 1 in der gleichen Einführungsrichtung liegen wie auch der zugeordnete Positionierungsvorsprung 14, 15, 16, so dass je ein Positionierungsvorsprung 14,15,16 und ein Fixierungsvorsprung 31 bei der Montage durch dieselbe Positionierungsaussparung 7, 8, 9 der Bodenöffnung 5 des Gefäßbodens 4 geführt werden.

An dem Gefäßboden 4 des Rührgefäßes 1 sind des Weiteren mehrere elektrische Kontakte 32 in Form von Kontaktstiften angeordnet, welche zur Herstellung einer elektrisch leitenden Verbindung mit entsprechenden elektrischen Kontakten (nicht dargestellt) des Basisgerätes 20 der Küchenmaschine 3 dienen.

Das hier lediglich beispielhaft vorgeschlagene Fußteil 30 des Rührgefäßes 1 ist wie auch das Rührgefäß 1 insgesamt im Wesentlichen topfförmig ausgebildet und dient als Aufnahme für den Gefäßboden 4 des Rührgefäßes 1. Der Fußteil 30 stellt eine Standfläche für das Rührgefäß 1 bereit, um dieses beispielsweise auf eine Arbeitsplatte abstellen zu können, insbesondere wenn der Gefäßboden 4 aufgeheizt ist. In einem an dem Gefäßboden 4 montierten Zustand des Fußteils 30 ragen die elektrischen Kontakte 32 des Rührgefäßes 1 in das Innere des Fußteils 30 hinein. Das Fußteil 30 wiederum kann formkorrespondierend mit der Rührgefäßaufnahme des Basisgerätes 20 der Küchenmaschine 3 verbunden werden. Dabei gelangen die elektrischen Kontakte 32 des Rührgefäßes 1 in Kontakt mit entsprechenden elektrischen Kontakten des Basisgerätes 20.

Die Montage des Fußteils 30 an dem Gefäßboden 4 des Rührgefäßes 1 erfolgt beispielsweise so, dass das Fußteil 30 zunächst an den Gefäßboden 4 angesetzt wird und um die Rotationsachse 26 des durch die Bodenöffnung 5 des Rührgefäßes 1 ragenden Rührwerks 2 rotiert wird. Durch die Rotation des Fußteils 30 wird gleichzeitig ein Fixierungselement (nicht dargestellt) des Fußteils 30 zwischen dem Gefäßboden 4 und den Fixierungsvorsprüngen 31 des Rührwerkes 2 verspannt, so dass durch die Fixierung des Fußteils 30 an dem Rührgefäß 1 gleichzeitig auch das Rührwerk 2 an dem Rührgefäß 1 fixiert wird.

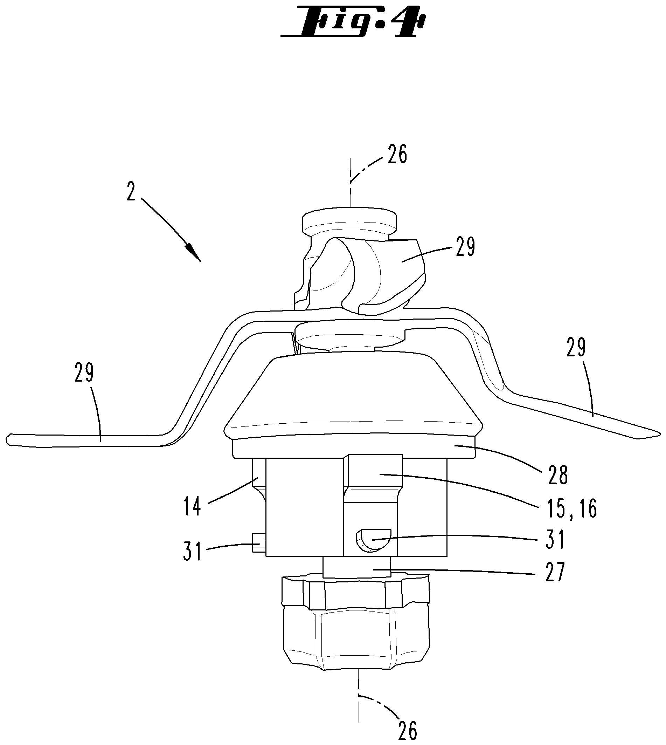

Fig. 4 zeigt im Detail das Rührwerk 2 mit den Messern 29, welche drehfest mit der Rührwerkwelle 27 verbunden sind. Die Rührwerkwelle 27 rotiert um die Rotationsachse 26. An dem Lagerkörper 28, welcher drehfest mit dem Gefäßboden 4 verbunden werden kann, sind mehrere, hier insgesamt drei, Positionierungsvorsprünge 14, 15, 16 (die Bezugsziffer 16 liegt in der Figur nicht sichtbar auf der Rückseite) angeordnet, welche zum Eingriff in korrespondierende Positionierungsvorsprünge 14, 15, 16 der Bodenöffnung 5 des Gefäßbodens 4 des Rührgefäßes 1 dienen. In gleicher radialer Richtung - bezogen auf die Rotationsachse 26 - sind unterhalb jedes Positionierungsvorsprungs 14, 15, 16 Fixierungsvorsprünge 31 angeordnet.

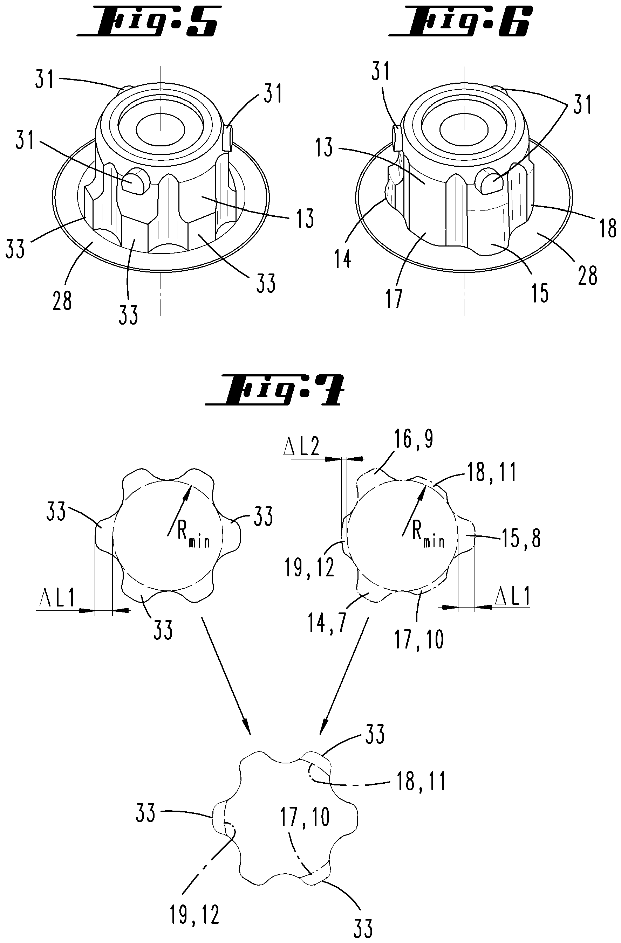

Die Figuren 5 und 6 zeigen je einen Teilbereich eines Lagerkörpers 28 eines Rührwerks 2, wobei Fig. 5 zunächst den Stand der Technik definiert und wobei Fig. 6 eine zweite erfindungsgemäße Ausführungsform zeigt, welche sich von der erfindungsgemäßen Ausführungsform gemäß den Figuren 3 und 4 unterscheidet.

Der in Fig. 5 dargestellte Lagerkörper 28 des Rührwerks 2 gemäß dem Stand der Technik weist insgesamt sechs Positionierungsvorsprünge 33 auf, von welchen in der Fig. 5 nur vier sichtbar sind. Über jedem zweiten Positionierungsvorsprung 33 befindet sich ein Fixierungsvorsprung 31. Es ergibt sich bezogen auf einen Querschnitt dieses Lagerkörpers 28 senkrecht zu der Rotationsachse 26 innerhalb einer Ebene, in welcher die Positionierungsvorsprünge 33 ausgebildet sind, die in Fig. 7 links oben dargestellte Kontur der Umfangsfläche 13. Erkennbar weist die Kontur eine zunächst kreisförmige Grundfläche mit einem kleinsten Radius Rₘᵢₙ auf, sowie die über diesen kleinsten Radius Rₘᵢₙ hinausragenden Positionierungsvorsprünge 33. Der kleinste Radius Rₘᵢₙ weist hier beispielsweise eine Größe von 13 mm auf, während die Positionierungsvorsprünge 33 von der kreisförmigen Umfangslinie um eine erste radiale Längendifferenz ΔL1 von hier beispielsweise 4 mm hervorstehen. Die Positionierungsvorsprünge 33 weisen alle zueinander identische radiale Längendifferenzen ΔL1 auf. Des Weiteren sind die Positionierungsvorsprünge 33 entlang der Umfangslinie des kreisförmigen Grundkörpers äquidistant hintereinander ausgebildet. Ein solches Rührwerk 2 gemäß Fig. 5 bzw. Fig. 7 links oben dient zur Befestigung an einem Gefäßboden 4 eines Rührgefäßes 1 mit einer entsprechenden Öffnungskontur 6, welche zu den Positionierungsvorsprüngen 33 korrespondierende Positionierungsaussparungen aufweist, nämlich hier insgesamt sechs Positionierungsaussparungen, welche ebenfalls äquidistant zueinander angeordnet sind und eine Form und Größe aufweisen, die den Positionierungsvorsprüngen 33 entspricht.

Fig. 6 bzw. Fig. 7 rechts oben zeigen eine erfindungsgemäße Ausführungsform eines Lagerkörpers 28 eines Rührwerks 2, welche von dem Stand der Technik abweicht. Das Rührwerk 2 weist hier beispielsweise Positionierungsvorsprünge 14, 15, 16, 17, 18, 19 mit zwei unterschiedlichen radialen Längendifferenzen ΔL1, ΔL2 auf. Zum einen weist die Umfangsfläche 13 des Rührwerks 2 insgesamt drei erste Positionierungsvorsprünge 14, 15, 16 auf, welche eine erste radiale Längendifferenz ΔL1 aufweisen. Zum anderen weist die Umfangsfläche 13 drei zweite Positionierungsvorsprünge 17, 18, 19 auf, welche eine zweite radiale Längendifferenz ΔL2 aufweisen. Die radialen Längendifferenzen ΔL1, ΔL2 berechnen sich auch hier wieder ab einer Umfangslinie eines kreisförmigen Grundkörpers mit einem kleinsten Radius Rₘᵢₙ. Der kleinste Radius Rₘᵢₙ ist hier ebenfalls, analog zu Fig. 5, ungefähr 13 mm. Die erste radiale Längendifferenz ΔL1 der ersten Positionierungsvorsprünge 14, 15, 16 entspricht der ersten radialen Längendifferenz ΔL1 der Positionierungsvorsprünge 33 gemäß dem Stand der Technik, wie in Fig. 5 dargestellt. Die zweiten Positionierungsvorsprünge 17, 18, 19 weisen hingegen eine kleinere, zweite radiale Längendifferenz ΔL2 auf, welche hier nur ungefähr 1,5 mm beträgt. Die ersten Positionierungsvorsprünge 14, 15, 16 und die zweiten Positionierungsvorsprünge 17, 18, 19 sind jeweils äquidistant zueinander angeordnet, wobei sich jeweils ein erster Positionierungsvorsprung 14, 15, 16 zwischen jeweils zwei zweiten Positionierungsvorsprüngen 17,18,19 entlang der Umfangslinie befindet bzw. jeweils ein zweiter Positionierungsvorsprung 17, 18, 19 zwischen jeweils zwei ersten Positionierungsvorsprüngen 14, 15, 16. Es ergibt sich die in Fig. 7 rechts oben dargestellte Kontur der Umfangsfläche 13 des Lagerkörpers 28 gemäß Fig. 6. Die drei ersten Positionierungsvorsprünge 14, 15, 16 sind jeweils in Winkelabständen von 120° zueinander beabstandet. Ebenfalls sind die zweiten Positionierungsvorsprünge 17,18,19 relativ zueinander mit einem Winkelbereich von 120° beabstandet. Zwischen jeweils einem ersten Positionierungsvorsprung 14, 15, 16 und einem benachbarten zweiten Positionierungsvorsprung 17,18,19 existieren Winkelabschnitte von 60°.

Im Vergleich unterscheiden sich die Konturen gemäß dem in Fig. 5 dargestellten Stand der Technik und der in Fig. 6 dargestellten erfindungsgemäßen Ausführungsform wie in der in Fig. 7 unten gezeigten Überdeckung. Insbesondere existieren Bereiche entlang der Kontur, welche voneinander abweichen. Dies sind die Winkelbereiche, in welchen der Lagerkörper 28 der in Fig. 6 dargestellten Ausführungsform verkürzte zweite Positionierungsvorsprünge 17, 18, 19 aufweist, welche eine zweite radiale Längendifferenz ΔL2 aufweisen, die kleiner ist als die erste radiale Längendifferenz ΔL1 der Positionierungsvorsprünge 33 bzw. der ersten Positionierungsvorsprünge 14, 15, 16.

Die in Fig. 7 dargestellten Umfangskonturen des Lagerkörpers 28 entsprechen gleichzeitig einer Öffnungskontur 6 einer Bodenöffnung 5 eines formkorrespondierenden Gefäßbodens 4. Daher sind die in Fig. 7 rechts dargestellten Positionierungsvorsprünge 14, 15, 16, 17, 18, 19 gleichzeitig auch als Positionierungsaussparungen 7, 8, 9, 10, 11, 12 beziffert.

Wie aus Fig. 7 ersichtlich führt die erfindungsgemäße Ausführungsform des Rührwerks 2 dazu, dass das in Fig. 6 dargestellte Rührwerk 2 zwar in eine korrespondierende Bodenöffnung 5 gemäß sowohl der in Fig. 7 links dargestellten, als auch gemäß der in Fig. 7 rechts dargestellten Ausführungsform eingebracht werden kann, jedoch nicht umgekehrt das aus dem Stand der Technik bekannte Rührwerk 2 gemäß Fig. 5 in eine Bodenöffnung 5, deren Öffnungskontur 6 der in Fig. 7 rechts gezeigten Ausführungsform entspricht. Wie in Fig. 7 unten dargestellt, sind die Positionierungsvorsprünge 33 zu lang, um in die zweiten Positionierungsaussparungen 10, 11, 12 des Gefäßbodens 4 eingesetzt werden zu können. Dadurch kann das aus dem Stand der Technik bekannte Rührwerk 2 gemäß Fig. 5 nicht in ein Rührgefäß 1, welches ein Rührwerk 2 gemäß Fig. 6 erfordert, eingesetzt werden. Hingegen kann jedoch das Rührwerk 2 gemäß Fig. 6 in ein für den Stand der Technik gemäß Fig. 5 ausgebildetes Rührgefäß 1 eingesetzt werden, wobei dann die zweiten Positionierungsvorsprünge 17, 18, 19 des Lagerkörpers 28 die in dem Gefäßboden 4 ausgebildeten Positionierungsaussparungen nicht vollständig überdecken. Für eine vollständige Abdichtung des Rührwerks 2 gegenüber dem Rührgefäß 1 sorgt dann jedoch der Lagerkörper 28 sowie ggf. ein zusätzliches Dichtelement, so dass auch in diesem Fall kein Medium durch die Bodenöffnung 5 aus dem Rührgefäß 1 entweichen kann. Somit sind die Rührwerke 2 gemäß den Ausführungsformen in den Figuren 3 bzw. 4 und 6 zwar kompatibel zu Rührgefäßen 1 des Standes der Technik, jedoch nicht umgekehrt ein in Fig. 5 dargestelltes Rührwerk 2 zu den erfindungsgemäßen Rührgefäßen 1.

**Liste der Bezugszeichen**

| | | | |
|---|---|---|---|
| 1 | Rührgefäß | 29 | Messer |
| 2 | Rührwerk | 30 | Fußteil |
| 3 | Küchenmaschine | 31 | Fixierungsvorsprung |
| 4 | Gefäßboden | 32 | Elektrischer Kontakt |
| 5 | Bodenöffnung | 33 | Positionierungsvorsprung |
| 6 | Öffnungskontur | ΔL1 | Erste radiale Längendifferenz |
| 7 | Erste Positionierungsaussparung | ΔL2 | Zweite radiale Längendifferenz |
| 8 | Erste Positionierungsaussparung | | |
| 9 | Erste Positionierungsaussparung | Rₘᵢₙ | Kleinster Radius |
| 10 | Zweite Positionierungsaussparung | | |
| 11 | Zweite Positionierungsaussparung | | |
| 12 | Zweite Positionierungsaussparung | | |
| 13 | Umfangsfläche | | |
| 14 | Erster Positionierungsvorsprung | | |
| 15 | Erster Positionierungsvorsprung | | |
| 16 | Erster Positionierungsvorsprung | | |
| 17 | Zweiter Positionierungsvorsprung | | |
| 18 | Zweiter Positionierungsvorsprung | | |
| 19 | Zweiter Positionierungsvorsprung | | |
| 20 | Basisgerät | | |
| 21 | Display | | |
| 22 | Schalter | | |
| 23 | Deckel | | |
| 24 | Verriegelungselement | | |
| 25 | Griff | | |
| 26 | Rotationsachse | | |
| 27 | Rührwerkwelle | | |
| 28 | Lagerkörper | | |

## Patentansprüche

1. Rührgefäß (1) für eine elektromotorisch betriebene Küchenmaschine (3), mit einem Gefäßboden (4), welcher eine Bodenöffnung (5) zur Aufnahme eines durch den Gefäßboden (4) in das Rührgefäß (1) ragbaren Rührwerks (2) aufweist, wobei eine Öffnungskontur (6) der Bodenöffnung (5) in Umfangsrichtung eine Mehrzahl von hintereinander ausgebildeten Positionierungsaussparungen (7, 8, 9, 10, 11, 12) aufweist, **dadurch gekennzeichnet, dass** mehrere erste Positionierungsaussparungen (7, 8, 9) der Öffnungskontur (6) mit einer ersten radialen Längendifferenz (ΔL1) über einen kleinsten Radius (Rₘᵢₙ) der Öffnungskontur (6) hervorstehen, und wobei die Öffnungskontur (6) mindestens eine in Umfangsrichtung zwischen zwei ersten Positionierungsaussparungen (7, 8, 9) ausgebildete zweite Positionierungsaussparung (10, 11, 12) aufweist, welche mit einer zweiten radialen Längendifferenz (ΔL2) über den kleinsten Radius (Rₘᵢₙ) der Öffnungskontur (6) hervorsteht, welche zweite radiale Längendifferenz (ΔL2) kleiner ist als die erste radiale Längendifferenz (ΔL1).

2. Rührgefäß (1) nach Anspruch 1, **dadurch gekennzeichnet, dass** der Gefäßboden (4) genau drei erste Positionierungsaussparungen (7, 8, 9) aufweist.

3. Rührgefäß (1) nach Anspruch 1 oder 2, **dadurch gekennzeichnet, dass** der Gefäßboden (4) genau drei zweite Positionierungsaussparungen (10, 11, 12) aufweist.

4. Rührgefäß (1) nach einem der vorhergehenden Ansprüche, **dadurch gekennzeichnet, dass** die erste radiale Längendifferenz (ΔL1) und die zweite radiale Längendifferenz (ΔL2) einen Längenunterschied von mindestens 1mm, bevorzugt von mindestens 2 mm, zueinander aufweisen.

5. Rührgefäß (1) nach einem der vorhergehenden Ansprüche, **dadurch gekennzeichnet, dass** die erste radiale Längendifferenz (ΔL1) größer ist als 2 mm, vorzugsweise größer ist als 3 mm.

6. Rührgefäß (1) nach einem der vorhergehenden Ansprüche, **dadurch gekennzeichnet, dass** die zweite radiale Längendifferenz (ΔL2) kleiner ist als 2 mm.

7. Rührgefäß (1) nach einem der vorhergehenden Ansprüche, **dadurch gekennzeichnet, dass** der kleinste Radius (Rₘᵢₙ) der Öffnungskontur (6) der Bodenöffnung (5) des Gefäßbodens (4) des Rührgefäßes (1) zwischen 10 mm und 15 mm beträgt.

8. Rührwerk (2) zum Einsetzen in eine Bodenöffnung (5) eines Gefäßbodens (4) eines Rührgefäßes (1) einer elektromotorisch betriebenen Küchenmaschine (3), wobei das Rührwerk (2) mehrere an seiner Umfangsfläche (13) in Umfangsrichtung hintereinander ausgebildete Positionierungsvorsprünge (14,15,16) und mehrere an seiner Umfangsfläche (13) in Umfangsrichtung hintereinander ausgebildete Fixierungsvorsprünge (31) aufweist, wobei die Positionierungsvorsprünge (14,15,16) bezogen auf eine Rotationsachse (26) des Rührwerks (2) in einer anderen Axialebene liegen als die Fixierungsvorsprünge (31), und wobei bezogen auf eine Richtung parallel zu der Rotationsachse (26) je ein Fixierungsvorsprung (31) und ein Positionierungsvorsprung (14, 15, 16) hintereinander liegen, **dadurch gekennzeichnet, dass** das Rührwerk (2) genau drei in Umfangsrichtung in äquidistanten Abständen ausgebildete Positionierungsvorsprünge (14,15,16) und genau drei in Umfangsrichtung in äquidistanten Abständen ausgebildete Fixierungsvorsprünge (31) aufweist.

9. Rührwerk (2) zum Einsetzen in eine Bodenöffnung (5) eines Gefäßbodens (4) eines Rührgefäßes (1) einer elektromotorisch betriebenen Küchenmaschine (3), wobei das Rührwerk (2) mehrere an seiner Umfangsfläche (13) in Umfangsrichtung hintereinander ausgebildete Positionierungsvorsprünge (14, 15, 16, 17, 18, 19) und mehrere an seiner Umfangsfläche (13) in Umfangsrichtung hintereinander ausgebildete Fixierungsvorsprünge (31) aufweist, wobei die Positionierungsvorsprünge (14,15,16, 17, 18, 19) bezogen auf eine Rotationsachse (26) des Rührwerks (2) in einer anderen Axialebene liegen als die Fixierungsvorsprünge (31), **dadurch gekennzeichnet, dass** mehrere erste Positionierungsvorsprünge (14, 15, 16) der Umfangsfläche (13) mit einer ersten radialen Längendifferenz (ΔL1) über einen kleinsten Radius (Rₘᵢₙ) der Umfangsfläche (13) hervorstehen, und wobei die Umfangsfläche (13) mindestens einen in Umfangsrichtung zwischen zwei ersten Positionierungsvorsprüngen (14,15,16) ausgebildeten zweiten Positionierungsvorsprung (17,18,19) aufweist, welcher mit einer zweiten radialen Längendifferenz (ΔL2) über den kleinsten Radius (Rₘᵢₙ) der Umfangsfläche (13) hervorsteht, welche zweite radiale Längendifferenz (ΔL2) kleiner ist als die erste radiale Längendifferenz (ΔL1).

10. Rührwerk (2) nach Anspruch 9, **dadurch gekennzeichnet, dass** das Rührwerk (2) genau drei erste Positionierungsvorsprünge (14, 15, 16) aufweist.

11. Rührwerk (2) nach Anspruch 9 oder 10, **dadurch gekennzeichnet, dass** das Rührwerk (2) genau drei zweite Positionierungsvorsprünge (17, 18, 19) aufweist.

12. Rührwerk (2) nach einem der Ansprüche 9 bis 11, **dadurch gekennzeichnet, dass** die erste radiale Längendifferenz (ΔL1) und die zweite radiale Längendifferenz (ΔL2) einen Längenunterschied von mindestens 1 mm, bevorzugt von mindestens 2 mm, zueinander aufweisen.

13. Rührwerk (2) nach einem der Ansprüche 9 bis 12, **dadurch gekennzeichnet, dass** die erste radiale Längendifferenz (ΔL1) größer ist als 2 mm, vorzugsweise größer ist als 3 mm.

14. Rührwerk (2) nach einem der Ansprüche 9 bis 13, **dadurch gekennzeichnet, dass** die zweite radiale Längendifferenz (ΔL2) kleiner ist als 2 mm.

15. Rührwerk (2) nach einem der Ansprüche 9 bis 14, **dadurch gekennzeichnet, dass** der kleinste Radius (Rₘᵢₙ) der Umfangskontur der Umfangsfläche (13) des Rührwerks (2) zwischen 10 mm und 15 mm beträgt.

16. Rührgefäß (1) nach einem der Ansprüche 1-7 mit einem Rührwerk (2) nach einem der Ansprüche 8 bis 15, **dadurch gekennzeichnet, dass** ein erster Positionierungsvorsprung (14, 15, 16) in Bezug auf seine Form und Größe so zu einer ersten Positionierungsaussparung (7, 8, 9) korrespondiert, dass er diese vollständig füllt, und dass ein zweiter Positionierungsvorsprung (17,18,19) in Bezug auf seine Form und Größe so zu einer zweiten Positionierungsaussparung (10, 11, 12) korrespondiert, dass er diese vollständig füllt.

17. Elektromotorisch betriebene Küchenmaschine (3) mit einem Basisgerät (20), einem mit dem Basisgerät (20) verbindbaren Rührgefäß (1) und einem in eine Bodenöffnung (5) eines Gefäßbodens (4) des Rührgefäßes (1) einsetzbaren Rührwerk (2), **dadurch gekennzeichnet, dass** das Rührgefäß (1) nach einem der Ansprüche 1 bis 7 ausgebildet ist und dass das Rührwerk (2) nach einem der Ansprüche 8 bis 15 ausgebildet ist.

## Claims

1. A stirring vessel (1) for an electric motor operated kitchen appliance (3), comprising a vessel bottom (4), which has a bottom opening (5) for accommodating a stirrer (2), which can protrude through the vessel bottom (4) into the stirring vessel (1), wherein an opening contour (6) of the bottom opening (5) has a plurality of positioning recesses (7, 8, 9, 10, 11, 12) embodied one behind the other in the circumferential direction, **characterized in that** a plurality of first positioning recesses (7, 8, 9) of the opening contour (6) protrude with a first radial length difference (ΔL1) beyond a smallest radius (Rₘᵢₙ) of the opening contour (6), and wherein the opening contour (6) has at least one second positioning recess (10, 11, 12), which is embodied in the circumferential direction between two first positioning recesses (7, 8, 9) and which protrudes with a second radial length difference (ΔL2) beyond the smallest radius (Rₘᵢₙ) of the opening contour (6), which second radial length difference (ΔL2) is smaller than the first radial length difference (ΔL1).

2. The stirring vessel (1) according to claim 1, **characterized in that** the vessel bottom (4) has exactly three first positioning recesses (7, 8, 9).

3. The stirring vessel (1) according to claim 1 or 2, **characterized in that** the vessel bottom (4) has exactly three second positioning recesses (10, 11 12).

4. The stirring vessel (1) according to one of the preceding claims, **characterized in that** the first radial length difference (ΔL1) and the second radial length difference (ΔL2) have a length difference of at least 1 mm, preferably of at least 2 mm, to one another.

5. The stirring vessel (1) according to one of the preceding claims, **characterized in that** the first radial length difference (ΔL1) is larger than 2 mm, preferably larger than 3 mm.

6. The stirring vessel (1) according to one of the preceding claims, **characterized in that** the second radial length difference (ΔL2) is smaller than 2 mm.

7. The stirring vessel (1) according to one of the preceding claims, **characterized in that** the smallest radius (Rₘᵢₙ) of the opening contour (6) of the bottom opening (5) of the vessel bottom (4) of the stirring vessel (1) is between 10 mm and 15 mm.

8. A stirrer (2) for inserting into a bottom opening (5) of a vessel bottom (4) of a stirring vessel (1) of an electric motor operated kitchen appliance (3), wherein the stirrer (2) has a plurality of positioning protrusions (14, 15, 16) embodied on its circumferential surface (13) one behind the other in the circumferential direction and wherein the stirrer (2) has a plurality of securing protrusion (31) embodied on its circumferential surface (13), wherein the positioning projections (14, 15, 16) with respect to an axis of rotation (26) of the stirrer (2) lie in a different axial plane than the securing protrusion (31), and with respect to a direction parallel to the axis of rotation (26), one securing protrusion (31) and a positioning projection (14, 15, 16) lie one behind the other, **characterized in that** the stirrer (2) has exactly three positioning protrusions (14, 15, 16), which are embodied at equidistant distances in the circumferential direction and that the stirrer has exactly three securing protrusions (31), which are embodied at equidistant distances in the circumferential direction.

9. The stirrer (2) for inserting into a bottom opening (5) of a vessel bottom (4) of a stirring vessel (1) of an electric motor operated kitchen appliance (3), wherein the stirrer (2) has a plurality of positioning protrusions (14, 15, 16, 17, 18, 19) embodied on its circumferential surface (13) one behind the other in the circumferential direction wherein the stirrer (2) and has a plurality of securing protrusion (31) embodied on its circumferential surface (13) one behind the other in the circumferential direction, wherein the positioning protrusions (14, 15, 16, 17, 18, 19) with respect to an axis of rotation (26) of the stirrer (2) lie in a different axial plane than the securing protrusion (31), **characterized in that** a plurality of first positioning protrusions (14, 15, 16) of the circumferential surface (13) protrude with a first radial length difference (ΔL1) beyond a smallest radius (Rₘᵢₙ) of the circumferential surface (13), and wherein the circumferential surface (13) has at least one second positioning protrusion (17, 18, 19), which is embodied in the circumferential direction between two first positioning protrusions (14, 15, 16), and which protrudes with a second radial length difference (ΔL2) beyond the smallest radius (Rₘᵢₙ) of the circumferential surface (13), which second radial length difference (ΔL2) is smaller than the first radial length difference (ΔL1).

10. The stirrer (2) according to claim 9, **characterized in that** the stirrer (2) has exactly three first positioning protrusions (14, 15, 16).

11. The stirrer (2) according to claim 9 or 10, **characterized in that** the stirrer (2) has exactly three second positioning protrusions (17, 18, 19).

12. The stirrer (2) according to one of claims 9 to 11, **characterized in that** the first radial length difference (ΔL1) and the second radial length difference (ΔL2) have a length difference of at least 1 mm, preferably of at least 2 mm, to one another.

13. The stirrer (2) according to one of claims 9 to 12, **characterized in that** the first radial length difference (ΔL1) is larger than 2 mm, preferably larger than 3 mm.

14. The stirrer (2) according to one of claims 9 to 13, **characterized in that** the second radial length difference (ΔL2) is smaller than 2 mm.

15. The stirrer (2) according to one of claims 9 to 14, **characterized in that** the smallest radius (Rₘᵢₙ) of the circumferential contour of the circumferential surface (13) of the stirrer (2) is between 10 mm and 15 mm.

16. Stirring vessel (1) according to one of claims 1 to 7 comprising a stirrer (2) according to one of claims 1 to 7, **characterized in that** a first positioning protrusion (14, 15, 16), with regard to its shape and size, corresponds to a first positioning recess (7, 8, 9) in such a way that it completely fills it, and that a second positioning protrusion (17, 18, 19), with regard to its shape and size, corresponds to a second positioning recess (10, 11, 12) in such a way that it completely fills it.

17. An electric motor operated kitchen appliance (3) comprising a base unit (20), a stirring vessel (1), which can be connected to the base unit (20), and a stirrer (2), which can be inserted into a bottom opening (5) of a vessel bottom (4) of the stirring vessel (1), **characterized in that** the stirring vessel (1) is embodied according to one of claims 1 to 7 and that the stirrer (2) is embodied according to one of the claims 8 to 15.

## Revendications

1. Récipient d'agitation (1) pour un appareil de cuisine (3) à moteur électrique, comprenant un fond de récipient (4) qui présente une ouverture de fond (5) pour recevoir un agitateur (2) qui peut faire saillie à travers le fond de récipient (4) dans le récipient d'agitation (1), dans lequel un contour d'ouverture (6) de l'ouverture de fond (5) présente dans la direction périphérique plusieurs évidements de positionnement (7, 8, 9, 10, 11, 12) formés les uns derrière les autres, **caractérisé en ce que** plusieurs premiers évidements de positionnement (7, 8, 9, 10, 11, 12) du contour d'ouverture (6) dépassent avec une première différence de longueur radiale (ΔL1) d'un rayon le plus petit (Rₘᵢₙ) du contour d'ouverture (6), et dans lequel le contour d'ouverture (6) présente au moins un deuxième évidement de positionnement (10, 11, 12) formé en direction périphérique entre deux premiers évidement de positionnement (7, 8, 9) et qui dépasse avec une deuxième différence de longueur radiale (ΔL2) du plus petit rayon (Rₘᵢₙ) du contour d'ouverture (6), laquelle deuxième différence de longueur radiale (ΔL2) est inférieure à la première différence de longueur radiale (ΔL1).

2. Récipient d'agitation (1) selon la revendication 1, **caractérisé en ce que** le fond du récipient (4) présente exactement trois premiers évidements de positionnement (7, 8, 9).

3. Récipient d'agitation (1) selon la revendication 1 ou 2, **caractérisé en ce que** le fond du récipient (4) présente exactement trois deuxièmes évidements de positionnement (10, 11, 12).

4. Récipient d'agitation (1) selon l'une des revendications précédentes, **caractérisé en ce que** la première différence de longueur radiale (ΔL1) et la deuxième différence de longueur radiale (ΔL2) présentent une différence de longueur l'une par rapport à l'autre d'au moins 1 mm, de préférence d'au moins 2 mm.

5. Récipient d'agitation (1) selon l'une des revendications précédentes, **caractérisé en ce que** la première différence de longueur radiale (ΔL1) est supérieure à 2 mm, de préférence supérieure à 3 mm.

6. Récipient d'agitation (1) selon l'une des revendications précédentes, **caractérisé en ce que** la deuxième différence de longueur radiale (ΔL2) est inférieure à 2 mm.

7. Récipient d'agitation (1) selon l'une des revendications précédentes, **caractérisé en ce que** le plus petit rayon (Rₘᵢₙ) du contour d'ouverture (6) de l'ouverture de fond (5) du fond de récipient (4) du récipient d'agitation (1) est compris entre 10 mm et 15 mm.

8. Agitateur (2) pour insertion dans une ouverture de fond (5) d'un fond de récipient (4) d'un récipient d'agitation (1) d'un appareil de cuisine (3) à moteur électrique, dans lequel l'agitateur (2) présente une pluralité de saillies de positionnement (14, 15, 16) formées sur sa surface périphérique (13) les unes derrière les autres dans la direction périphérique et une pluralité de saillies de fixation (31) formées sur sa surface périphérique (13) les unes derrière les autres dans la direction périphérique, dans lequel les saillies de positionnement (14, 15, 16) se trouvent, par rapport à un axe de rotation (26) de l'agitateur (2), dans un plan axial différent que les saillies de fixation (31), et dans lequel chaque fois une saillie de fixation (31) et une saillie de positionnement (14, 15, 16) se trouvent l'une derrière l'autre par rapport à une direction parallèle à l'axe de rotation (26), **caractérisé en ce que** l'agitateur (2) présente exactement trois saillies de positionnement (14, 15, 16) formées à intervalles équidistants dans la direction périphérique et exactement trois saillies de fixation (31) formées à intervalles équidistants dans la direction périphérique.

9. Agitateur (2) pour insertion dans une ouverture de fond (5) d'un fond de récipient (4) d'un récipient d'agitation (1) d'un appareil de cuisine (3) à moteur électrique, dans lequel l'agitateur (2) présente une pluralité de saillies de positionnement (14, 15, 16, 17, 18) formées sur sa surface périphérique (13) les unes derrière les autres dans la direction périphérique, 19) et une pluralité de saillies de fixation (31) formées sur sa surface périphérique (13) les unes derrière les autres dans la direction périphérique, dans lequel les saillies de positionnement (14, 15, 16, 17, 18, 19) se trouvent, par rapport à un axe de rotation (26) de l'agitateur (2), dans un plan axial différent que les saillies de fixation (31), **caractérisé en ce que** plusieurs premières saillies de positionnement (14, 15, 16) de la surface périphérique (13) dépassent avec une première différence de longueur radiale (ΔL1) d'un rayon le plus petit (Rₘᵢₙ) de la surface périphérique (13), et dans lequel la surface périphérique (13) présente au moins une deuxième saillie de positionnement (17, 18, 19) formée en direction périphérique entre deux premières saillies de positionnement (14, 15, 16) et qui dépasse avec une deuxième différence de longueur radiale (ΔL2) du plus petit rayon (Rₘᵢₙ) de la surface périphérique (13), laquelle deuxième différence de longueur radiale (ΔL2) est inférieure à la première différence de longueur radiale (ΔL1).

10. Agitateur (2) selon la revendication 9, **caractérisé en ce que** l'agitateur (2) a exactement trois premières saillies de positionnement (14, 15, 16).

11. Agitateur (2) selon la revendication 9 ou 10, **caractérisé en ce que** l'agitateur (2) a exactement trois deuxièmes saillies de positionnement (17, 18, 19) .

12. Agitateur (2) selon l'une quelconque des revendications 9 à 11, **caractérisé en ce que** la première différence de longueur radiale (ΔL1) et la deuxième différence de longueur radiale (ΔL2) présentent l'une par rapport à l'autre une différence de longueur d'au moins 1 mm, de préférence d'au moins 2 mm.

13. Agitateur (2) selon l'une quelconque des revendications 9 à 12, **caractérisé en ce que** la première différence de longueur radiale (ΔL1) est supérieure à 2 mm, de préférence supérieure à 3 mm.

14. Agitateur (2) selon l'une des revendications 9 à 13, **caractérisé en ce que** la deuxième différence de longueur radiale (ΔL2) est inférieure à 2 mm.

15. Agitateur (2) selon l'une des revendications 9 à 14, **caractérisé en ce que** le plus petit rayon (Rₘᵢₙ) du contour périphérique de la surface périphérique (13) de l'agitateur (2) est compris entre 10 mm et 15 mm.

16. Récipient d'agitation (1) selon l'une quelconque des revendications 1 à 7 avec un agitateur (2) selon l'une quelconque des revendications 8 à 15, **caractérisé en ce qu'**une première saillie de positionnement (14, 15, 16) correspond en forme et en taille à un premier évidement de positionnement (7, 8, 9) de manière à le remplir complètement, et qu'une deuxième saillie de positionnement (17, 18, 19) correspond en forme et en taille à un deuxième évidement de positionnement (10, 11, 12) de manière à le remplir complètement.

17. Appareil de cuisine (3) à moteur électrique comportant un appareil de base (20), un récipient d'agitation (1) pouvant être relié à l'appareil de base (20) et un agitateur (2) insérable dans une ouverture de fond (5) d'un fond de récipient (4) du récipient d'agitation (1), **caractérisé en ce que** le récipient d'agitation (1) est conçu selon l'une des revendications 1 à 7, et **en ce que** l'agitateur (2) est conçu selon l'une des revendications 8 à 15.
